**Europäisches Patentamt**

**European Patent Office**

**Office européen des brevets**

(19)

(11) Publication number : **0 407 625 B1**

# EUROPEAN PATENT SPECIFICATION

(12)

(45) Date of publication of patent specification :
13.01.93 Bulletin 93/02

(51) Int. Cl.⁵ : **G01B 11/02**

(21) Application number : **89112541.1**

(22) Date of filing : **08.07.89**

(54) **Method and apparatus for determining line centers in a microminiature element.**

(43) Date of publication of application :
16.01.91 Bulletin 91/03

(45) Publication of the grant of the patent :
13.01.93 Bulletin 93/02

(84) Designated Contracting States :
**DE FR GB**

(56) References cited :
EP-A- 0 013 325
PTB MITTEILUNGEN FORSCHEN & PRÜFEN,
vol. 95, no. 1, 1985, pages 1-10; F.J.
SCHEDEWIE et al.: "Entwicklung undCharak-
teristiken von Kantenfindermikroskopen mit
elektro-optischer Mudulation"

(56) References cited :
OPTICAL ENGINEERING, vol. 26, no. 1,
January 1987, pages 81-85; D. NYYSSONEN:
"Practical method for edge detection
andfocusing for linewidth measurements on
wafers"
APPLIED OPTICS, vol. 27, no. 13, 1st July 1988,
pages 2786-2793, New York, US; C.W. SEE et
al.: "Differential amplitudescanning optical
microscope: theory and applications"

(73) Proprietor : **International Business Machines
Corporation
Old Orchard Road
Armonk, N.Y. 10504 (US)**

(72) Inventor : **Kallmeyer, Michael, Ing.-grad.
Sperberweg 24
W-7030 Böblingen (DE)**
Inventor : **Wagner, Dietmar
Sechselbergstrasse 23
W-7000 Stuttgart 50 (DE)**

(74) Representative : **Klocke, Peter, Dipl.-Ing.
IBM Deutschland GmbH Patentwesen und
Urheberrecht Schönaicher Strasse 220
W-7030 Böblingen (DE)**

## Description

The present invention relates to a technique utilized in the fabrication of microminiature devices and, more particularly, to a method and an apparatus for determining line centers in a microminiature element such as on a semiconductor wafer or a mask having linewidths and other feature spacings below the one micron range.

Linewidth measurement and the determination of line centers is well known in the integrated circuit fabrication industry for process characterization and tool evaluation. In particular, linewidth measurement is valuable in the evaluation of lithography systems or particular steps in a photoresist or etching process. As device dimensions decrease, increasing demands are made to measurement techniques for precisely determining lines in the submicron range.

EP-A-0013 325 describes an optical system that is particularly adapted for accurate, nondestructive measurement of surface features encountered in semi-conductor manufacturing. A spot of laser light is focussed on the surface of the object and then scanned across the features of interest. Light reflected from the edges and surface of the object is detected by photomultipliers which generate signals with peaks representing the edges. Linewidths or distances are then obtained by computing the location differences between the peaks appearing in the multiplier signals.

PTB-Mitteilungen Forschen + Pruefen, Vol. 95, 1/85, pp. 1-10 discloses the determining of edges on lines having a linewidth in the range of one micron. The edges are determined by two focussed laser scan spots on the object being illuminated successively with a distance below the classic resolving power. The signals generated by a photodetector which receives the light reflected from the edges and the surfaces of the object are processed. After several steps and a final differential step linewidths are obtained by computing locations of signal peaks. This method is directed on the determination of edges having a mutual distance of about one micron. Thus the disclosed method and apparatus are not suitable for determining lines in the submicron range because of the shape and the small distance of the signal peaks which increase the measurement error to a high degree. Further, the error is negatively influenced by the analog signal processing and the differential step which causes additional high frequency errors.

Thus the invention as claimed is intended to remedy these drawbacks. It solves the problem of providing a method and an apparatus for determining highly accurate micro lines in the submicron range in real time.

The present invention comprises well known techniques which are combined and modified such that the new method and the apparatus can determine lines with a linewidth down to 0.25 micron. The method and the apparatus determine the line center of the scanned line in order to obtain results with a minimum of errors.

The method and apparatus of the present invention use a light beam illumination arrangement which generates a light beam which is directed on the object. The light reflected by the object is measured. This technique is well known as indicated above.

According to step A) of the method two focussed laser spots are directed on the object, both being illuminated successively with a distance below the classic resolving power (0.61 x wavelength / numerical aperture). The distance of the spots is about 0.2 micron which is obtained by 0.4 x wavelength / numerical aperture as described in PTB-Mitteilungen. The illumination can be accomplished by using two different laser spots whereof one is lightened to the same extent as the other one is darkened, or by using only one spot which oscillates between the two locations with a distance below the classic resolving power.

The scanning of the lines as described in step B) along a line across the line to be determined can be accomplished by moving a conventional X-Y table relative to the laser spots or by scanning the line by moving the laser spots. Both techniques are state of the art.

Steps C) and D) which refer to the processing of an analog electrical measurement signal are known as well from PTB-Mitteilungen. The signal reflected by the scanned line comprises a DC component which varies with the reflectivity of the object. This DC component is superposed with an AC component which is generated by the oscillation of the two laser spots. The AC component of the signal obtained comprises the information which can be used to determine the line center of the scanned line. Thus the DC component has to be eliminated.

Additionally, the high frequency noise components produced by the laser and the scanning are eliminated in order to provide an appropriate measurement signal. This is accomplished by a tuned amplifier which allows a simple and fast elimination of the high frequency noise.

In step E) the maximum and minimum values of the filtered measurement signal are digitized. That means that only the values of the peaks of the AC component are digitized for further digital processing. Thus a reduction of data is achieved which have to be processed by the determination of the scanned line. It is also possible to develop the digitized maximum and minimum values in two steps: first, digitization of the total signal, and subsequent by the reduction of data by erasing the digitized values except the maximum and minimum values, but the latter method needs more memory capacity and processing time.

With the digitized values two sine shaped curves can be generated according to step G). The sine shaped curves represent the envelope of the AC component signal and are both correlated to each other. They are formed by maximum/minimum and minimum/maximum values, respectively, lying on the respective curve of an envelope.

The following evaluation of the digital values of the sine shaped curves is accomplished by step H) of the inventive method. With conventional digital processing techniques the intersection point of the two sine shaped curves is computed. With the method according to this invention it is possible to determine the center of lines in the submicron range with a small error only and in real time. This is promoted by a more accurate determination of the intersection point of two curves, both having a slope in comparison to an intersection point determination of only one curve and by computing the curves and the intersection point.

The result can be improved by modifying step G) with an additional digital filtering of the measurement signal in order to eliminate further noise on this signal.

According to a further embodiment of the invention an additional reference signal can be generated which is considered with the processing of the digital values of the measurement signal. This reference signal is preferably processed corresponding and in parallel to the measurement signal, and after the parallel digitization the line center is computed on the basis of the measurement signal and the reference signal. Thus, this embodiment comprises further steps which are discussed below.

In order to obtain said reference signal step A) is modified so that after generating two successively illuminated laser spots part of the light of at least one of said laser spots is outcoupled. The residue of the two laser spots is then directed and focussed on the object with a distance below the classic resolving power. The outcoupling of the light can be accomplished by several optical means.

Further, the method comprises steps for parallel processing of the outcoupled light to generate a useful reference signal. The steps applied to the outcoupled light correspond to steps applied to the light reflected by the object. Thus in step c) an analog electrical reference signal is developed from the outcoupled light; in step d) a filtered reference signal is generated by eliminating the DC component and the high frequency noise components of the electrical reference signal of step c); and in step e) the maximum and minimum values of said filtered reference signal are digitized. Further, it is necessary to combine the digitized values of the measurement and the reference signal. This can be accomplished by an additional step F) inserted between steps E) and G) in which the digitized values obtained in steps E) and e) of the measurement signal and the reference signal, respectively, are synchronously processed to generate a correlated measurement signal with eliminated low frequency noise. Both signals have to be synchronized in order to correlate the digitized values of each signal with respect to time.

The low frequency noise is eliminated by computing the digitized values of the measurement signal and the reference signal according to the equation

$$Mc = Mt / Rt$$

with

Mc = computed measurement signal at time t
Mt = measurement signal at time t and
Rt = reference signal at time t.

According to step D) the filtering in step d) can be accomplished with a tuned amplifier.

The use of digital processing of an additional reference signal permits a further decrease of the measurement error due to the elimination of the laser generated noise. Thus, with the inventive method it is possible to use an appropriate laser for the optical arrangement which would otherwise provide a high noise level, as this noise can be eliminated by the invention. This only became possible through the surprising recognition of the fact that the low frequency noise on the measurement signal corresponds with that on the reference signal.

A further reduction of measurement errors can be obtained by a further embodiment of the invention in which a glass plate is inserted as a beam splitter in the optical path of the laser beams to outcouple the light for the reference signal. By inserting the glass plate in the optical path with an inclination which is equal to the Brewster angle, the light of one laser spot is according to physical laws completely transmitted while a part (appr. 15%) of the light of the other laser spot is reflected. This is caused by the different vibration planes of the light of each laser beam. The reflected part of the light is used to develop the analog reference signal.

With this additional step, only one polarizing direction of the light is outcoupled in an easy way and errors caused by the optical arrangement are avoided. Further, electronic phase displacement does not occur.

Thus measurement and reference signals can be received at the same time if tuned amplifiers with the same time constant are used.

In another embodiment of the invention errors generated by the use of a laser scanner can be eliminated. In this case the relative movement between the object and the laser spots is accomplished by a scanning movement of the spots across the object. This feature of the inventive method can occur in combination with the reference signal or without reference signal and removes the errors which arise by the movement of the laser beam in the optical arrangement. Thus, these errors only depend on the location of the laser beam in the optical instruments during the scanning movement. These errors are constant for one optical arrangement if there are no changes in the arrangement and no differences in temperature between the error determination procedure and the measurement procedure.

If the local errors are compensated together with the temporal errors for which the reference signal is provided, step F) is modified in synchronized processing of the digitized values of the measurement signal, the reference signal and digitized values of a correction signal. With the correction signal the above-mentioned local intensity variations are considered, and with this modified step the low frequency noise and the local intensity variations are eliminated. Obviously, the signals are correlated to each other in respect of time and location in order to compute the digital values of the corresponding measurement points. The removal of the variations which depend on the time and the location is accomplished by computing for each measurement point a corrected measurement value dependent on the location of the scanning laser spots. The corrected measurement signal value is obtained by the equation

$$Mlc = Ml / Rl \times Cl$$

with

$Mlc$ = computed measurement signal value at location $l$

$Ml$ = measurement signal value at location $l$

$Rl$ = reference signal value at location $l$

$Cl$ = correction signal value at location $l$

$l$ = number of the location.

From all this computed measurement signal values respective envelope curves depending on the location of the laser scanner are generated. This allows computing of the intersection point of the curves as indicated above.

In the event the correction signal values are computed without the reference signal values the corrected measurement signal value depending on the location of the laser scanner spots is obtained by the following modified equation:

$$Mcl = Ml / Cl.$$

The digitized values of the correction signal are usually obtained only once for the optical measurement arrangement and before the the first measurement procedure. Preferably the digitized correction signal values are obtained by

directing one of said laser spots of said laser illumination arrangement on an optically homogeneous reflecting surface;

moving said laser scanner spots along a line across said surface in which case the deflection correlates with the movement of the laser scanner on the object to be determined;

developing an analog electrical correction signal of the light reflected from said surface;

digitizing the minimum and maximum values of said correction signal;

storing the digitized values with reference to the location of said laser scanner movement.

The apparatus for implementing the method uses a measurement signal and a reference signal, both handled as described above. The apparatus comprises an optical imaging system including means for generating two laser scanner spots which are focussed on the object with a distance below the classic resolving power. One appropriate optical imaging system is disclosed in PTB-Mitteilungen which uses a laser, several optical polarization means, and for generating the two laser spots, among others an opto-electronical modulator and a Wollaston prism. Other systems like a mirror which oscillates with high frequency, for example, are applicable as well. The light of one laser beam then oscillates on the object with a predetermined distance while by using the opto-electronical modulator and the Wollaston prism one laser beam is divided into two laser beams with different vibration directions which are illuminated alternatively on the object with a predetermined distance. The reflected light is then guided to first receiving means by conventional optical means. Further, the optical system includes means for outcoupling the light of said laser scanner spots and guiding the outcoupled light to second receiving means. The first and second receiving means include photo-detectors which provide an electrical measurement signal and reference signal, respectively.

The apparatus further comprises means for effecting relative movement between the optical system and the object in a plane parallel to the surface of the object such that the spot scans along a line across the line to be determined.

Additionally, the apparatus comprises means for processing digital signals which synchronously controls said relative movement with said means for generating the laser scanner spots, receives from said first receiving means said measurement signal and from said second receiving means said reference signal, and detects the position of the line center.

Finally the apparatus comprises memory means which stores the position of the line center and supplies said movement means with this position.

In a further combination of features of the invention the first and second receiving means additionally comprise a tuned amplifier and an analog/digital converter which develop first a filtered analog signal without DC components and high frequency noise and then provide a digitized signal.

In a further embodiment of the invention a glass plate inserted in the optical path of the laser beams with an inclination corresponding to the Brewster angle serves as a beam splitter.

In another embodiment of the invention the method is modified so that one blinking light spot is generated from which part of the light is outcoupled before the light spot is directed and focussed on the object. For generating the blinking light spot white light or laser light can be used. The spot is scanned along a line across a line as discussed above. The processing of the obtained measurement signal and the reference signal corresponds to the processing of the measurement signal and the reference signal of the method described before. Subsequently, the measurement signal and the reference signal are correspondingly digitized and synchronously processed. Additionally a correction signal can be considered and processed as discussed in connection with the scanning spot.

After having developed one digitized measurement signal with reduced errors one or two sine shaped curves of an envelope both being correlated to each other are generated. The first of said sine shaped curves is generated by computing the difference quotient of the curve which is created by the digitized maximum values and the second by computing the difference quotient of the curve which is created by the digitized minimum values. In this embodiment the generation of the difference quotient is accomplished by computing instead of by using two laser spots as in the method described hereinabove. The distance of the two laser spots below the classic resolving power is considered by a corresponding displacement during the computing of the difference quotient which follows common mathematical laws. After this computing one or two sine shaped curves are obtained.

The detection of the line center is then accomplished by the determination of the intersection point of one of the sine shaped curves with the zero line or of the intersection point of the two sine shaped curves.

Before this processing in order to detect the line center the measurement signal can be digitally filtered.

Accordingly, the apparatus for implementing this single point method uses another assembly for generating one light spot. This assembly comprises an optical system which includes means for generating a blinking light spot. With the inventive method and apparatus as described herein the line center of lines with a linewidth below the classic resolving power can be detected with an accuracy of 3 sigma equal to 12 to 17 nm down to linewidths of 250 to 350 nm if all actions for decreasing errors as described above are taken.

A further advantage of the present invention is the application of the method in the dark field as well as in the bright field.

Another advantage of the invention described herein is the application in conventional optical systems and microscopes.

Further, the invention allows the determination of the line center and thus of distances in real time, so that manufacturing processes are not retarded by this measurement method and apparatus.

These and other advantages and objects of the present invention can be taken from the following description of preferred embodiments in accordance with the accompanying drawings, in which

Fig. 1 is a schematic diagram of the optical arrangement using one laser scanning point;

Fig. 2 is a schematic diagram of the optical arrangement using two laser scanning points;

Fig. 3 is a block diagram showing the signal evaluation and processing;

Fig. 4 are diagrams showing the signal course and the detection of the line center using the single point method of Fig. 1, and

Fig. 5 are diagrams showing the signal course and the detection of the line center using the two point method of Fig. 2.

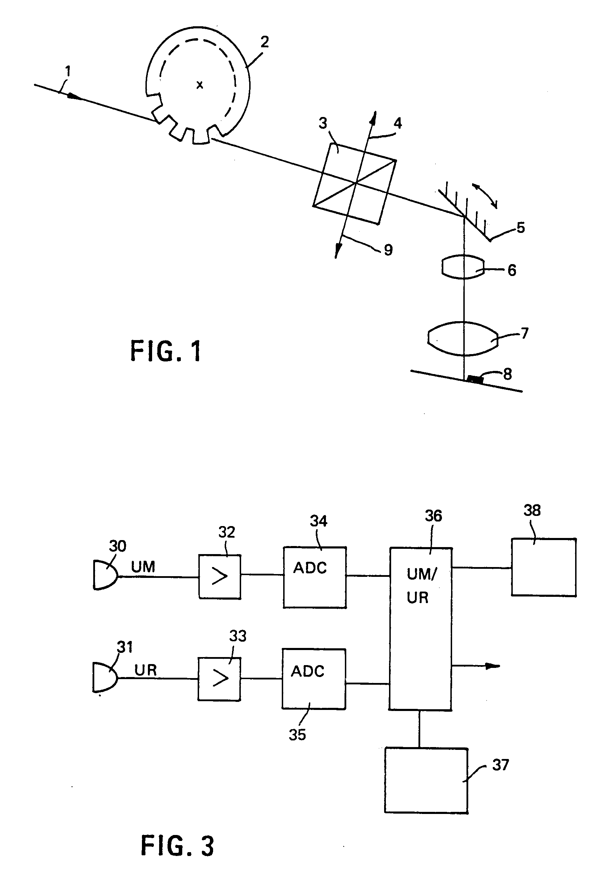

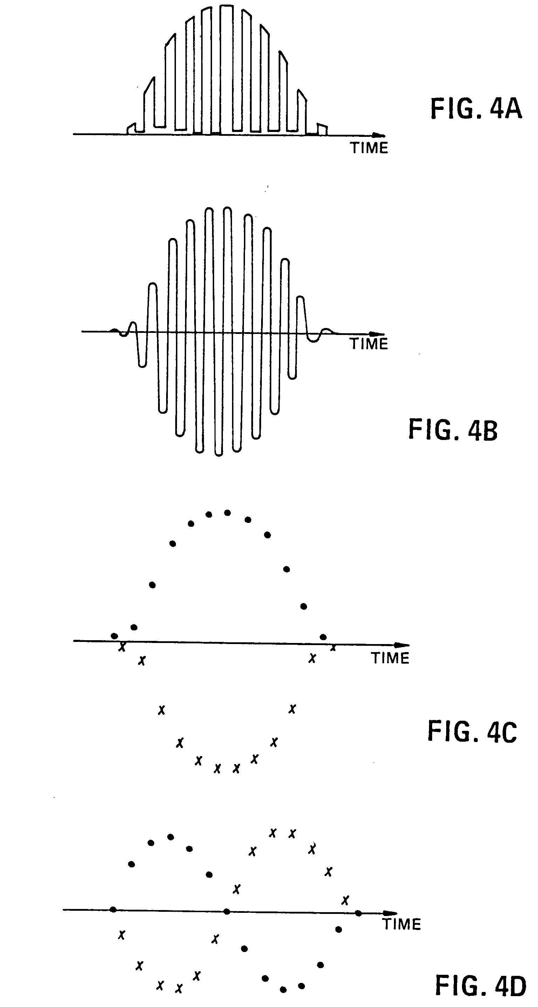

In Fig. 1 a light beam 1 is chopped into pulses by a rotating chopper wheel 2 which additionally provides the trigger pulses for the evaluation of the light reflected by the object. The light beam 1 passes a beam splitter 3 which outcouples part of the light of the light beam 1 as a reference light beam 4. The residue of light beam 1 is directed via a scanning mirror 5, an ocular 6 and an objective 7 on the object 8. The scanning mirror 5, the ocular 6 and the objective 7 are parts of common microscopes, spectrometers or similar optical devices. The light reflected by the object reaches the beam splitter 3 via the objective 7 and the ocular 6, and the beam splitter 3 reflects a measurement light beam 9 to a photodetector 30 of Fig. 3.

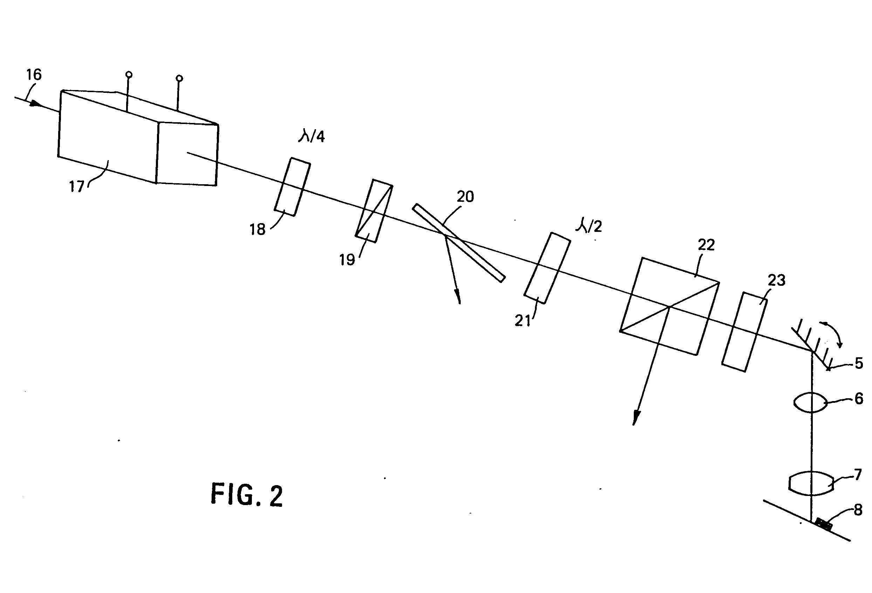

In Fig. 2 a linearly polarized laser beam 16 is directed to an electrooptical light modulator 17 which is triggered by a digital signal processor 36 (Fig. 3). For the function of the electrooptical light modulator 17 it is necessary to provide it with monochromatic parallel light. The electrooptical light modulator 17 generates in conjunction with the quarter-wave plate 18 and a +/- quarter-wave voltage at the electrooptical light modulator 17 two waves which are linearly polarized at right angles. The wavelength of the quarter-wave voltage is the wavelength of the laser light. In the Wollaston prism 19 the waves are deflected in different directions depending on the polarizing direction with a splitting angle of about one minute. This results in two partially overlapping light spots in the object plane which are alternately lightened up. The distance of the spots is below the classic resolving power and is about 0.4 x wavelength / numerical aperture.

After leaving the Wollaston prism 19 the two laser light beams which result in the two laser spots in the object plane pass a glass plate 20 which serves as a beam splitter. As the glass plate 20 is inserted in the optical path under an angle of about 57 degrees (Brewster angle) only part of one polarizing direction (perpendicular to the plane of incidence) is reflected and thus outcoupled for later signal processing. The other polarizing direction (parallel with the plane of incidence) is not reflected and passes through the glass plate 20. After the glass plate 2o the two laser light beams pass the half-wave plate 21 in order to turn the vibration direction of the light beams such that from each vibration direction an equal part passes the following polarizing beam splitter 22. The following quarter-wave plate 23 effects the rotation of the vibration direction such that after the reflection of the light from the object the light beam is reflected by the beam splitter 22 to the photodetector 30 of Fig. 3. The arrangement according to Fig. 2 utilizes as well a scanning mirror 5, an ocular 6 and an objective 7 to focus the light on the object 8. All these optical parts can be members of a microscope, spectrometer or similar optical devices.

Fig. 3 is a block diagram showing a processing system for the line center detection and is designed to receive the output of the photodetector 30 of the measurement light beam 9 and the output of a photodetector 31 of the reference light beam 4. Both photodetectors 30, 31 generate an analog electrical signal and are connected with tuned amplifiers 32 and 33, respectively. With the tuned amplifiers 32, 33, both having the same time constant, the high frequency noise and the DC component in each signal are eliminated. The filtered signals from the tuned amplifiers are digitized by analog/digital converters (ADC) 34, 35, respectively, which digitize only the maximum and minimum values of each signal and which are then processed in a digital signal processor (DSP) 36. The DSP is further connected with a position unit 37 which supplies the DSP 36 with the current relative position between the scanning beam and the object and with a light pulse trigger unit 38 which controls the generation of light pulses by the chopper wheel 2 or the light modulator 17. The DSP controls the synchronized processing by analog/digital converters 34 and 35, the position unit 37 and the light pulse trigger unit 38. Dates are stored in the memory 39.

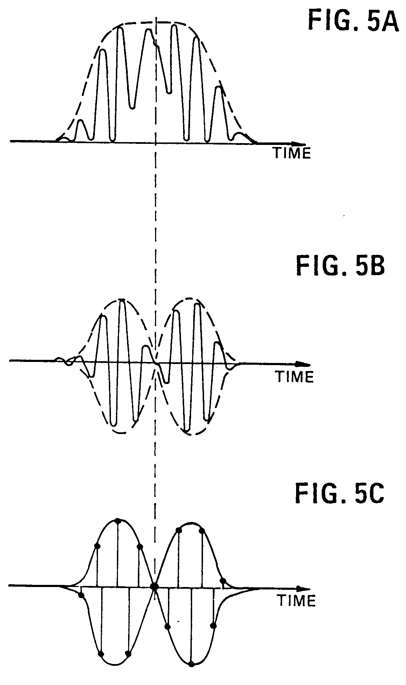

In the following the evaluation of the courses of reference signals is described with reference to Fig. 4 and Fig. 5. The corresponding reference signals which are used to eliminate the low frequency noise are not shown because of the equivalent evaluation including the digitization. After the digitization, reference and measurement signal are processed as described above in order to generate measurement signals with eliminated low frequency noise.

Fig. 4a shows the analog electrical measurement signal at the output of the photodetector 30 when using the single point method. After filtering this signal by the tuned amplifier 32, the signal course according to Fig. 4b is obtained. The maximum values and the minimum values of the measurement signal of Fig. 4b and the equivalent evaluated reference signal are digitized and processed to eliminate the low frequency noise and to generate one measurement signal which forms envelopes according to Fig. 4c. Subsequently, the maximum values and/or the minimum values are used to compute the difference quotient with respect to the resolving power below the classic resolving power. Fig. 4d shows the difference quotient of the maximum values and the minimum values. The intersection point of the two difference quotient courses of the maximum and the minimum values indicates the line center. It is also possible to use the difference quotient of either the maximum or the minimum values to detect the line center as the intersection point with the zero line.

Fig. 5 discloses the signal evaluation of the method using two laser spots which are focussed on the object. Fig. 5a shows the measurement generated by the photodetector 30. After the elimination of the DC component and the high frequency noise by the tuned amplifier 32, the signal according to Fig. 5b is obtained. Subsequently the maximum and minimum values are digitized and the envelope as indicated with dashed lines in Fig. 5b is formed as shown in Fig. 5c. Fig. 5c discloses the processed measurement signal which is formed from the measurement signal and the reference signal of and from which the low frequency noise is eliminated (low frequency noise subtraction). Finally, the intersection point of the two envelopes is the line center of the line to be detected. Before the determination of the intersection point the signals can be digitally filtered in order to eliminate remaining noise on the curves and to allow the accurate determination of the intersection point.

Fig.4 and 5 only schematically show the signal courses, i.e. the high frequency noise and the low frequency noise are not depicted.

The inventive methods and the apparatus described above are not limited to the given particular embodiments which are only exemplary.

The methods and the apparatus described above allow the detection of the line center of lines in the range of .25 to 35 micrometer in real time with a precision of 3 sigma equal 12 to 17 nm. This is not obtainable with the methods and devices known in the art.

## Claims

1. Method for determining line centers in a microminiature element by use of a laser beam illumination arrangement and the measurement of light reflected by the lines of the object, said method comprising the following steps:

   A) directing two focussed laser spots on said object, both being illuminated successively with a distance below the classic resolving power;

   B) scanning said lines by moving said laser spots along a line across the line to be determined;

   C) developing an analog electrical measurement signal of the light reflected by the scanned line;

   D) generating a filtered measurement signal by eliminating the DC component and the high frequency noise components of said electrical measurement signal;

E) digitizing the maximum and minimum values of said filtered measurement signal;

G) processing said digitized values of said measurement signal to generate two sine shaped curves of an envelope both being correlated to each other, and formed by maximum/minimum values and minimum/maximum values, respectively, of said filtered measurement signal lying on the respective curve of an envelope;

H) digital determination of the intersection point of said two curves as the line center of the scanned line.

2. The method according to claim 1 wherein step G) further comprises

digital filtering of said measurement signal before processing said digitized values in order to eliminate noise on said signal;

3. The method according to claim 1 or 2

wherein step A) is extended to comprise the following :

A) generating two laser spots being illuminated successively, outcoupling part of the light of at least one of said laser spots before directing and focussing them on said object with a distance below the classic resolving power; and

wherein the method further comprises the steps, to be inserted between steps B) and C),

c) developing an analog electrical reference signal from said outcoupled light;

d) generating a filtered reference signal by eliminating the DC component and the high frequency noise components of said electrical reference signal;

e) digitizing the maximum and minimum values of said filtered reference signal;

and wherein subsequently the following step F) is inserted between step E) and G):

F) synchronized processing of said digitized values of said measurement signal and said reference signal to generate a correlated measurement signal with eliminated low frequency noise.

4. The method according to claim 3 wherein the outcoupling of the light of only one laser spot is accomplished by a glass plate which is inserted in the optical path of said laser beam in the Brewster angle.

5. Apparatus for implementing the method as claimed in claim 3 comprising

an optical imaging system including means for generating two laser spots which are focussed on the object (8) with a distance below the classic resolving power, and guiding the reflected light to first receiving means (30), said optical system further including means (20) for outcoupling part of the light of said laser spots and guiding the outcoupled light to second receiving means (31), said first and second receiving means including photodetectors which provide an electrical measurement signal and reference signal, respectively;

means (37) for effecting relative movement between the optical system and the object in a plane parallel to the surface of the object such that the spots scan along a line across the line to be determined;

means (36) for processing digital signals which synchronously controls said relative movement with said means for generating the laser scanner spots, receives from said first receiving means said measurement signal and from said second receiving means said reference signal, and detects the position of the line center;

memory means (39) which stores the position of the line center and supplies said movement means with this position.

6. Apparatus as claimed in claim 5 wherein said first and second receiving means further comprise a tuned amplifier (32, 33) and an analog/digital converter (34, 35).

7. Apparatus as claimed in claim 5 or 6 wherein said outcoupling means comprises a glass plate (20) inserted in the optical path of said laser beam.

8. Method for determining line centers in a microminiature element by use of a light beam illumination arrangement and the measurement of light reflected by the lines of the object, said method comprising the following steps:

A) generating one blinking light spot, outcoupling part of the light of said light spot before directing and focussing it on said object;

B) scanning said lines by moving said light spot along a line across the line to be determined;

C) developing an analog electrical measurement signal of the light reflected by the scanned line and an analog electrical reference signal of the outcoupled light;

D) generating a filtered measurement signal and a filtered reference signal by eliminating the DC component and the high frequency noise components of said electrical measurement signal and said electrical reference signal, respectively;

E) digitizing the maximum and minimum values of said filtered measurement signal and of said filtered reference signal;

F) synchronized processing of said digitized values of said measurement signal and said reference signal to generate a correlated measurement signal with eliminated low frequency noise;

G) processing said digitized values of said measurement signal to generate one or two sine shaped curves of an envelope both being correlated to each other, the first of said sine shaped curves being generated by computing the difference quotient of the curve created by the digitized maximum values, and the second by computing the difference quotient of the curve created by the digitized minimum values with a displacement below the classic resolving power;

H) digital determination of the intersection point of said one sine shaped curve with the zero line or of the intersection point of said sine shaped curves, respectively, as the line center of the scanned line.

9. The method according to claim 8 wherein step G) further comprises

digital filtering of said measurement signal before processing said digitized values in order to eliminate noise on said signal.

10. Apparatus for implementing the method as claimed in one of the preceding claims 8 or 9 comprising

an optical imaging system including means for generating one blinking light spot which is focussed on the object (8), and guiding the reflected light to first receiving means (30), said optical system further including means (3) for outcoupling a part of the light of said light spot and guiding the outcoupled light to second receiving means (31), said first and second receiving means including photodetectors which provide an electrical measurement signal and reference signal, respectively;

means (37) for effecting a relative movement between the optical system and the object in a plane parallel to the surface of the object such that the spot scans along a line across the line to be determined;

means (36) for processing digital signals which synchronously controls said relative movement with said means for generating the light scanner spots, receives from said first receiving means said measurement signal and from said second receiving means said reference signal, and detects the position of the line center;

memory means (39) which stores the position of the line center and supplies said movement means with this position.

11. Apparatus as claimed in claim 10 wherein said first and second receiving means further comprise a tuned amplifier (32, 33) and an analog/digital converter (34, 35).

## Patentansprüche

1. Verfahren zur Bestimmung einer Linienmitte in einem Mikrominiaturelement unter Verwendung einer Laserstrahl- Beleuchtungsanordnung und der Messung des durch die Linien des Gegenstandes reflektierten Lichtes, wobei das Verfahren die folgenden Schritte umfaßt:

A) Richten zweier fokussierter Laser-Lichtpunkte auf den Gegenstand, die beide nacheinander in einem Abstand unterhalb des klassischen Auflösungsvermögens beleuchtet werden,

B) Abtasten der Linien durch Bewegung der Laser-Lichtpunkte längs einer Linie quer zu der zu bestimmenden Linie,

C) Entwickeln eines analogen elektrischen Meßsignals des von der abgetasteten Linie reflektierten Lichtes,

D) Erzeugen eines gefilterten Meßsignals durch Eliminieren der Gleichstromkomponente und der hochfrequenten Störspannungskomponenten des elektrischen Meßsignals,

E) Digitalisieren der Maximum- und-Minimumwerte des gefilterten Meßsignals,

G) Verarbeiten der digitalisierten Werte des Meßsignals, um zwei sinusförmige Kurven einer Hüllkurve zu erzeugen, die beide zueinander korreliert sind und durch Maximum-/Minimumwerte bzw. Minimum-/Maximumwerte des gefilterten Meßsignals gebildet werden, die auf der betreffenden Kurve einer Hüllkurve liegen,

H) Digitale Bestimmung des Schnittpunktes der beiden Kurven als den Linienmittelpunkt der abgetasteten Linie.

2. Verfahren nach Anspruch 1, bei dem der Schritt G) weiter umfaßt

digitales Filtern des Meßsignals vor dem Verarbeiten der digitalisierten Werte, um Störspannungen des Signals zu eliminieren.

3. Verfahren nach Anspruch 1 oder 2, bei dem der Schritt A) erweitert wird, um folgendes zu umfassen:

A) Erzeugen zweier Laser- Lichtpunkte, die nacheinander beleuchtet werden, Auskoppeln eines Teils des Lichtes zumindest eines der Laser-Lichtpunkte, bevor diese auf den Gegenstand gerichtet und fokussiert werden in einem Abstand unterhalb des klassischen Auflösungsvermögens und

bei dem das Verfahren weiter die zwischen den Schritten B) und C) einzufügenden Schritte umfaßt

c) Entwickeln eines analogen elektrischen Bezugssignals aus dem ausgekoppelten Licht,

d) Erzeugen eines gefilterten Bezugssignals durch Eliminieren der Gleichstromkomponente und der hochfrequenten Störspannungskomponenten des elektrischen Bezugssignals,

e) Digitalisieren der Maximum- und Minimumwerte des gefilterten Bezugssignals,

und bei dem anschließend der folgende Schritt F) zwischen den Schritten E) und G) eingefügt wird:

F) Synchronisiertes Verarbeiten der digitalisierten Werte des Meßsignals und des Bezugssignals, um ein korreliertes Meßsignal mit eliminierter niederfrequenter Störspannung zu erzeugen.

4. Verfahren nach Anspruch 3, bei dem das Auskoppeln des Lichtes nur eines Laser-Lichtpunktes erreicht wird durch eine Glasplatte, die in den optischen Weg des Laserstrahles unter dem Brewsterschen Winkel eingefügt ist.

5. Gerät zum Implementieren des Verfahrens nach Anspruch 3, enthaltend

ein optisches Abbildungssystem, das eine Vorrichtung zum Erzeugen zweier Laser-Lichtpunkte einschließt, die auf den Gegenstand (8) in einem Abstand unterhalb des klassischen Auflösungsvermögens fokussiert werden und zum Leiten des reflektierten Lichtes in eine erste Empfangsvorrichtung (30), wobei das optische System weiter eine Vorrichtung (20) einschließt zum Auskoppeln eines Teil des Lichtes der Laserlichtpunkte und zum Weiterleiten des ausgekoppelten Lichtes in eine zweite Empfangsvorrichtung (31), wobei die erste und zweite Empfangsvorrichtung Fotodetektoren einschließen, die ein elektrisches Meßsignal bzw. ein Bezugssignal liefern.

eine Vorrichtung (37) zum Bewirken einer Relativbewegung zwischen dem optischen System und dem Gegenstand in einer Ebene parallel zur Oberfläche des Gegenstandes, so daß die Lichtpunkte längs einer Linie abtasten, die quer zu der zu bestimmenden Linie verläuft,

eine Vorrichtung (36) zum Verarbeiten digitaler Signale, die gleichzeitig die Relativbewegung zwischen den Vorrichtungen zum Erzeugen der Laser-Lichtpunkte steuert, von der ersten Empfangsvorrichtung das Meßsignal und von der zweiten Empfangsvorrichtung das Bezugssignal empfängt und die Position der Linienmitte feststellt,

eine Speichervorrichtung (39), die die Position der Linienmitte speichert und diese Position an die Bewegungsvorrichtung liefert.

6. Gerät nach Anspruch 5, bei dem die erste und zweite Empfangsvorrichtung weiter einen abgestimmten Verstärker (32, 33) und einen Analog-/Digital-Umsetzer (34, 35) enthalten.

7. Gerät nach Anspruch 5 oder 6, bei dem die Auskoppelvorrichtung eine Glasplatte (20) enthält, die in den optischen Weg des Laserstrahles eingefügt ist.

8. Verfahren zum Bestimmen der Linienmitte bei einem Mikrominiaturelement unter Verwendung einer Lichtstrahl-Beleuchtungsanordnung und der Messung des von den Linien des Gegenstandes reflektierten Lichtes, wobei das Verfahren die folgenden Schritte umfaßt:

A) Erzeugen eines blinkenden Lichtpunktes, Auskoppeln eines Teiles des Lichtes des Lichtpunktes, bevor er auf den Gegenstand gerichtet und fokussiert wird,

B) Abtasten der Linien durch Bewegung des Lichtpunktes längs einer Linie quer zu der zu bestimmenden Linie,

C) Entwickeln eines analogen elektrischen Meßsignals des von der abgetasteten Linie reflektierten Lichtes und eines analogen elektrischen Bezugssignals des ausgekoppelten Lichtes

D) Erzeugen eines gefilterten Meßsignals und eines gefilterten Bezugssignals durch Eliminieren der Gleichstromkomponente und der hochfrequenten Störspannungskomponenten des elektrischen Meßsignals, bzw. des elektrischen Bezugssignals,

E) Digitalisieren der Maximum- und Minimumwerte des gefilterten Meßsignals und des gefilterten Bezugssignals,

F) Synchronisiertes Verarbeiten der digitalisierten Werte des Meßsignals und des Bezugssignals, um ein korreliertes Meßsignal mit eliminierter niederfrequenter Störspannung zu erzeugen,

G) Verarbeiten der digitalisierten Werte des Meßsignals, um eine oder zwei sinusförmige Kurven einer Hüllkurve zu erzeugen, die beide zueinander korreliert sind, wobei die erste der sinusförmigen Kurven durch Berechnen des Differenzenquotienten der Kurve erzeugt wird, die durch die digitalisierten Maximumwerte geschaffen wurde, und die zweite durch Berechnen des Differenzenquotienten der Kurve, die durch die digitalisierten Minimumwerte geschaffen wurde bei einer Verschie-

bung unterhalb des klassischen Auflösungs-
vermögens,

H) Digitale Bestimmung des Schnittpunktes
der einen sinusförmigen Kurve mit der Nullinie bzw. des Schnittpunktes der sinusförmigen Kurven als die Linienmitte der abgetasteten Linie.

9. Verfahren nach Anspruch 8, bei dem der Schritt
G) weiter enthält

digitales Filtern des Meßsignals vor der
Verarbeitung der digitalisierten Werte, um Störspannungen des Signals zu eliminieren.

10. Gerät zum Implementieren des Verfahrens nach
einem der vorhergehenden Ansprüche 8 oder 9,
das enthält

ein optisches Abbildungssystem einschließlich einer Vorrichtung zum Erzeugen eines blinkenden Lichtpunktes, der auf den Gegenstand (8) fokussiert wird, und zum Weiterleiten
des reflektierten Lichtes einer ersten Empfangsvorrichtung (30), wobei das optische System weiter eine Vorrichtung (3) einschließt zum Auskoppeln eines Teils des Lichtes des Lichtpunktes und
zum Weiterleiten des ausgekoppelten Lichtes zu
einer zweiten Empfangsvorrichtung (31), wobei
die erste und zweite Empfangsvorrichtung Fotodetektoren einschließen, die ein elektrisches
Meßsignal und ein Bezugssignal liefern,

eine Vorrichtung (37) zum Bewirken einer
Relativbewegung zwischen dem optischen System und dem Gegenstand in einer Ebene parallel zur Oberfläche des Gegenstandes, so daß der
Lichtpunkt längs einer Linie abtastet, die quer zu
der zu bestimmenden Linie verläuft,

eine Vorrichtung (36) zum Verarbeiten digitaler Signale, die gleichzeitig die Relativbewegung mit der Vorrichtung zum Erzeugen der
Abtast- Lichtpunkte steuert, das Meßsignal von
der ersten Empfangsvorrichtung empfängt und
das Bezugssignal von der zweiten Empfangsvorrichtung und die Position der Linienmitte feststellt,

eine Speichervorrichtung (39), die die Position der Linienmitte speichert und diese Position an die Bewegungsvorrichtung liefert.

11. Gerät nach Anspruch 10, in dem die erste und
zweite Empfangsvorrichtung weiter einen abgestimmten Verstärker (32, 33) und einen Analog/Digital-Umsetzer (34, 35) enthalten.

**Revendications**

1. Méthode pour déterminer le centre d'une ligne
dans un élément microminiaturisé en utilisant un agencement d'éclairage à faisceau laser et la mesure de la lumière réfléchie par les lignes de l'objet, ladite méthode comprenant les étapes suivantes:

A) diriger deux spots laser focalisés sur ledit
objet lesquels sont tous deux éclairés successivement avec une distance inférieure au pouvoir de résolution classique;

B) balayer lesdites lignes en déplaçant lesdits
spots laser le long d'une ligne transversalement à la ligne à déterminer;

C) produire un signal de mesure électrique
analogique de la lumière réfléchie par la ligne
balayée;

D) engendrer un signal de mesure filtré en éliminant la composante de courant continu et
les composantes de bruit haute fréquence dudit signal de mesure électrique;

E) numériser les valeurs maximale et minimale dudit signal de mesure électrique;

G) traiter lesdites valeurs numérisées dudit signal de mesure afin d'engendrer deux courbes sinusoïdales d'une enveloppe lesquelles
sont toutes deux en corrélation entre elles, et
formées respectivement par les valeurs maximale/minimale et les valeurs minimale/maximale dudit signal de mesure se trouvant sur la
courbe respective d'une enveloppe;

H) déterminer numériquement le point d'intersection desdites deux courbes comme étant
le centre de ligne de la ligne balayée.

2. Méthode selon la revendication 1, dans laquelle
l'étape G) comprend en outre

le filtrage numérique dudit signal de mesure avant le traitement desdites valeurs numérisées afin d'éliminer le bruit sur ledit signal.

3. Méthode selon les revendications 1 ou 2,

dans laquelle l'étape A) est étendue pour
comprendre ce qui suit:

A) engendrer deux spots laser qui sont éclairés successivement, rejeter une partie de la
lumière d'au moins un des deux spots laser
avant de les diriger et de les focaliser sur ledit
objet avec une distance inférieure au pouvoir
de résolution classique; et

dans laquelle la méthode comprend les
étapes à insérer entre les étapes B) et C),

c) produire un signal de référence électrique
analogique provenant de ladite lumière rejetée;

d) engendrer un signal de référence filtré en
éliminant la composante de courant continu et
les composantes de bruit haute fréquence dudit signal de référence électrique;

e) numériser les valeurs maximale et minimale dudit signal de référence filtré;

et dans laquelle l'étape suivante F) est ensuite insérée entre les étapes E) et G):

traitement synchronisé desdites valeurs numérisées dudit signal de mesure et dudit signal de référence pour engendrer un signal de mesure en corrélation, avec élimination du bruit basse fréquence.

4. Méthode selon la revendication 3, dans laquelle le rejet de la lumière d'un seul spot laser se fait à l'aide d'une lame de verre qui est insérée dans le trajet optique dudit faisceau laser suivant l'angle de Brewster.

5. Appareil pour mettre en oeuvre la méthode selon la revendication 3, comprenant:

un système imageur optique comprenant des moyens pour engendrer deux spots laser qui sont focalisés sur l'objet (8) avec une distance inférieure au pouvoir de résolution classique, et guider la lumière réfléchie sur un premier moyen de réception (30), ledit système optique comprenant en outre un moyen (20) pour rejeter une partie de la lumière desdits spots laser et guider la lumière rejetée sur un deuxième moyen de réception (31), lesdits premier et deuxième moyens de réception comprenant des photodétecteurs qui fournissent respectivement un signal de mesure et un signal de référence électriques;

un moyen (37) pour effectuer le mouvement relatif entre le système optique et l'objet dans un plan parallèle à la surface de l'objet de sorte que les spots balayent le long d'une ligne transversalement à la ligne à déterminer;

un moyen (36) pour traiter les signaux numériques lequel contrôle de façon synchrone ledit mouvement relatif avec lesdits moyens pour engendrer les spots du dispositif de balayage à faisceau laser, reçoit dudit premier moyen de réception ledit signal de mesure et dudit deuxième moyen de réception ledit signal de référence, et détecte la position du centre de ligne;

un moyen d'emmagasinage (39) qui emmagasine la position du centre de ligne et fournit cette position audit moyen pour effectuer le mouvement.

6. Appareil selon la revendication 5, dans lequel lesdits premier et deuxième moyens de réception comprennent en outre un amplificateur accordé (32, 33) et un convertisseur analogique/numérique (34, 35).

7. Appareil selon les revendications 5 ou 6, dans lequel ledit moyen de rejet comprend une lame de verre (20) insérée dans le trajet optique dudit faisceau laser.

8. Méthode pour déterminer le centre des lignes dans un élément microminiaturisé en utilisant un agencement d'éclairage à faisceau lumineux et la mesure de la lumière réfléchie par les lignes de l'objet, ladite méthode comprenant les étapes suivantes:

A) engendrer un spot lumineux clignotant, rejeter une partie de la lumière dudit spot lumineux avant de le diriger et le focaliser sur ledit objet;

B) balayer lesdites lignes en déplaçant ledit spot lumineux le long d'une ligne transversalement à la ligne à déterminer;

C) produire un signal de mesure électrique analogique de la lumière réfléchie par la ligne balayée et un signal de référence électrique analogique de la lumière rejetée;

D) engendrer un signal de mesure filtré et un signal de référence filtré en éliminant respectivement la composante de courant continu et les composantes de bruit haute fréquence dudit signal de mesure électrique et dudit signal de référence électrique.

E) munériser les valeurs maximale et minimale dudit signal de mesure filtré et dudit signal de référence filtré;

F) traiter de façon synchronisée lesdites valeurs numérisées dudit signal de mesure et dudit signal de référence afin d'engendrer un signal de mesure en corrélation, avec élimination du bruit basse fréquence;

G) traiter lesdites valeurs numérisées dudit signal de mesure afin d'engendrer une ou deux courbes sinusoïdales d'une enveloppe lesquelles sont toutes deux en corrélation entre elles, la première desdites courbes sinusoïdales étant engendrée par calcul du quotient différentiel de la courbe créée par les valeurs maximales numérisées, et la deuxième, par calcul du quotient différentiel de la courbe créée par les valeurs minimales numérisées avec un déplacement inférieur au pouvoir de résolution classique;

H) déterminer numériquement le point d'intersection de ladite une courbe sinusoïdale avec la ligne zéro, ou le point d'intersection desdites courbes sinusoïdales, respectivement, comme étant le centre de ligne de la ligne balayée.

9. Méthode selon la revendication 8, dans laquelle l'étape G) comprend en outre:

le filtrage numérique dudit signal de mesure avant le traitement desdites valeurs numérisées de manière à éliminer tout bruit sur ledit signal.

10. Appareil pour mettre en oeuvre la méthode selon l'une des revendications précédentes 8 ou 9, comprenant:

Un système imageur optique comprenant des moyens pour engendrer un spot lumineux clignotant qui est focalisé sur l'objet (8), et guider la lumière réfléchie sur un premier moyen de réception (30), ledit système optique comprenant en outre un moyen (3) pour rejeter une partie de la lumière dudit spot lumineux et guider la lumière rejetée sur un deuxième moyen de réception (31), lesdits premier et deuxième moyens de réception comprenant des photodétecteurs qui fournissent respectivement un signal de mesure et un signal de référence électriques;

un moyen (37) pour effectuer un mouvement relatif entre le système optique et l'objet dans un plan parallèle à la surface de l'objet de sorte que le spot balaye le long d'une ligne transversalement à la ligne à déterminer;

un moyen (36) pour traiter les signaux numériques lequel contrôle de façon synchrone ledit mouvement relatif avec lesdits moyens pour engendrer les spots lumineux du dispositif de balayage, reçoit dudit premier moyen de réception ledit signal de mesure et dudit deuxième moyen de réception ledit signal de référence, et détecte la position du centre de ligne;

un moyen d'emmagasinage (39) qui emmagasine la position du centre de ligne et fournit cette position audit moyen pour effectuer le mouvement.

11. Appareil selon la revendication 10, dans lequel lesdits premier et deuxième moyens de réception comprennent en outre un amplificateur accordé (32, 33) et un convertisseur analogique/numérique (34, 35).

FIG. 1

FIG. 3

13

FIG. 2

FIG. 4A

TIME

FIG. 4B

TIME

FIG. 4C

TIME

FIG. 4D

TIME

15

FIG. 5A

TIME

FIG. 5B

TIME

FIG. 5C

TIME